# EUROPÄISCHE PATENTSCHRIFT

(11) **EP 0 518 049 B1**
(45) Veröffentlichungstag und Bekanntmachung des Hinweises auf die Patenterteilung: **25.01.1995**
(21) Anmeldenummer: 92107764.0
(22) Anmeldetag: 08.05.1992
(51) Int. Cl.: C23C 24/10, B23K 35/32

(54) **Verfahren zur Herstellung von verschleissbeständigen Hartstoffschichten auf metallischen Unterlagen**
Method and applying wear-resistant hard coatings to metallic substrates
Procédé pour la réalisation de revêtements durs résistant à l'usure sur des substrats métalliques

(30) Priorität: 13.06.1991 DE 4119462; 25.09.1991 DE 4131871
(43) Veröffentlichungstag der Anmeldung: 16.12.1992
(73) Patentinhaber: Degussa Aktiengesellschaft, 60311 Frankfurt (DE)
(72) Erfinder: Beyer, Hans-Hermann, Dr. (Dipl.-Chem.), W-8756 Kahl/M. (DE); Gerner, Roland, Dr. (Dipl.-Chem.), W-6459 Rodenbach (DE); Weber, Wolfgang, W-8757 Karlstein/M. (DE); Zimmermann, Klaus, Dr. (Dipl.-Chem.), W-8755 Alzenau (DE)

(56) Entgegenhaltungen:
- EP-A- 0 264 643
- EP-A- 0 276 381
- DE-A- 3 936 479
- FR-E- 60 904
- US-A- 3 725 016

## Beschreibung

Die Erfindung betrifft ein Verfahren zur Herstellung von verschleißbeständigen Hartstoffschichten auf metallischen Unterlagen durch Aufbringen eines Gemisches aus Hartstoffen, Lotpulver und thermisch rückstandslos zersetzbaren, organischen Bindemitteln auf die metallische Unterlage, Ausbrennen des Bindemittels bei 300 bis 500° C und Auflöten der Hartstoffteilchen auf die Unterlage bei 800 bis 1100°C.

Um Werkstücke vor abrasivem Verschleiß zu schützen werden heute verschiedene Techniken angewendet. Neben den Methoden der klassischen Wärmebehandlung. wie Einsatzhärten, Nitrieren und Borieren, sind dies Verfahren wie das thermische Spritzen und Auftragschweißen, sowie CVD- und PVD-Techniken.

So ist aus der DE-OS 31 48 362 ein Verfahren bekannt. bei dem verschleißfeste Schichten und Lotschichten durch Aufspritzen entsprechender Metallpulver/Wachs-Gemische mit erhitzter Preßluft und anschließendem Sintern hergestellt werden. Dieses Verfahren ist relativ aufwendig und nicht für komplizierte Teilegeometrien geeignet.

In der US-PS 4,749,594 wird ein Verfahren zum Aufbringen von Hartstoffen auf Oberflächen beschrieben, bei dem zuerst eine Lotschicht und ein organischer Binder und dann die Hartstoffe aufgebracht und erhitzt wird.

Beim Verfahren gemäß US-PS 3,475,161 wird der Gegenstand durch Eintauchen in ein Gemisch aus Hartstoffpartikeln, organischer Binder und Lösungsmittel und anschließendem Sintern beschichtet. Mit diesem Verfahren erhält man keine optimalen Verschleißschutzschichten mit guter Haftung.

In neuerer Zeit ist mit der sogenannten Brazecoat-Technik ein weiteres Verfahren hinzugekommen, Bei dieser Technik werden Hartstoff-Lotschichten auf die durch Verschleiß beanspruchten Teile aufgebracht, indem auf die zu schützenden Bereiche Hartstoff-Lot-Verbundvliese aufgelegt oder aufgeklebt werden, und das Teil anschließend einem Lötprozeß unter Schutzgas unterzogen wird. Die Schichtdicken, die so erzeugt werden können, liegen normalerweise im Bereich zwischen 500 und 1500 »m. Ein solches Verfahren wird beispielsweise in der DE-PS 38 01 958 beschrieben.

Dort werden flexible Formkörper aus Hartstoffen, Lotpulver und thermisch rückstandsfrei zersetzbaren organischen Kunststoffen auf die zu schützenden Bereiche aufgebracht und bei rund 1100° C aufgelötet, wobei sich der als Bindemittel dienende Kunststoff zersetzt und sich an der zu schützenden Stelle eine Hartstoffschicht in einer Lotmatrix ausbildet.

Das Vlies-Verfahren hat aber den Nachteil, daß Verschleißschichten unterhalb etwa 500 »m auf diese Weise nicht aufgebracht werden können, außerdem ist es auf einfache Teilegeometrien beschränkt, da komplizierte Vlieskonfigurationen schwer herstellbar sind und das Aufbringen auch nicht automatisiert werden kann.

Es war daher Aufgabe der vorliegenden Erfindung, ein Verfahren zur Herstellung von verschleißbeständigen Hartstoffschichten auf metallischen Unterlagen durch Aufbringen eines Gemisches aus Hartstoffen, Lotpulver und thermisch rückstandslos zersetzbaren organischen Bindemitteln auf die Unterlage, Ausbrennen des Bindemittels bei 300 bin 500° C und Auflöten der Hartstoffteilchen auf die Unterlage bei 800 bis 1100° zu entwickeln, das auch Schichtdicken weit unterhalb 500 »m ermöglicht, für kompliziert geformte Teile anwendbar ist und in einen automatischen Prozeßablauf eingebunden werden kann.

Diese Aufgabe wird erfindungsgemäß dadurch gelöst, daß die Hartstoffteilchen und die Lotteilchen gemeinsam zu einer homogenen Mischung mit einer mittleren Korngröße von kleiner als 20 »m vermahlen, mit 0,1 bis 20 Gew.% des organischen Bindemittels und 1 bis 50 Gew.% eines organischen Lösungsmittels, Rest Hartstoff-/Lotteilchengemenge, zu einer Suspension verarbeitet und diese Suspension durch Tauchen, Siebdruck, Pinseln, Spritzen oder Spachteln auf die Unterlage in Schichtdicken zwischen 10 und 500 »m aufgebracht wird.

Vorzugsweise verwendet man als Bindemittel Polyacrylate, Polybutene, Polystyrole oder Zellulosederivate.

Als Lösungsmittel haben sich Kohlenwasserstoffe. Glykoläther, Glykolester, Alkohole und Ketone mit Verdunstungszahlen zwischen 10 und 10 000 bewährt.

Weiterhin kann es von Vorteil sein, entsprechend der Aufbringtechnik auf die Unterlage, die Viskosität der Suspension durch Zusatz rheologischer Substanzen auf bestimmt Werte einzustellen.

Entscheidend für den Erfolg des erfindungsgemäßen Verfahrens ist die homogene Verteilung der Hartstoff- und Lotteilchen, die man durch eine gemeinsame sorgfältige Vermahlung auf eine mittlere Teilchengröße von kleiner 20 »m erreichen kann. Bei Teilchengrößen größer 20 »m ist die Stabilität der Suspensionen nicht ausreichend, da sich die Teilchen unterschiedlich absetzen, bei Teilchengrößen unterhalb etwa 1 »m ist der Mahlvorgang zu zeitaufwendig. Vorteilhaft sind Teilchengrößen zwischen 1 und 10 »m.

Vorzugsweise verwendet man für das Vermahlen der Teilchen eine Rührwerkskugelmühle bzw. Attritor.

Das Lotpulver, vorzugsweise Nickelbasis- oder Kupferbasishartlot mittlere Korngröße 5-20 »m, und das Hartstoffpulver (z.B. WC, Cr₃C₂, TiC, mittlere Korngröße 5-20 »m) werden zusammen in eine Rührwerkskugelmühle (Attritor) gegeben und zwischen 0,5 und 2 Stunden unter Isopropanol vermahlen (WC-Kugeln, Durchmesser 1-2 mm). Der Lotanteil beträgt je nach Hartstoff/Lot-System zwischen 10-45 Gew.% (z.B. im System Nickelbasislot/Wolframkarbid 25-40 % Gew.). Das Feinpulvergemisch, das nach dem Mahlvorgang eine mittlere Korngröße von 1-20 »m aufweist, wird anschließend durch Zumischen eines Binders (0,1-20 Gew.%), beispielsweise aus einem Polysobutylen oder Polyacrylat und Lösungsmitteln (1-50 Gew.%) wie z.B. Xylol.
zu einer Hartmetall-Lot-Suspension verarbeitet. Diese Suspension kann je nach gewünschter Verarbeitungstechnik in ihrer Viskosität durch Zusatz bekannter rheologischer Substanzen so eingestellt werden, daß sie auf die zu beschichtenden Teile durch Siebdrucken, Tauchen, Spritzen, Pinseln oder Spachteln aufgebracht werden kann. Mit dem Tauchprozeß können Schichtdicken zwischen 10 und 500 »m erreicht werden. Mehrfachbehandlungen sind ebenfalls möglich. Beim Siebdruckverfahren ist die Schichtdicke von den vorgegebenen Siebdimensionen abhängig. Vor dem eigentlichen Lötvorgang (800-1100° C, Schutzgasatmosphäre oder Vakuum) wird der Binder in einem vorgeschalteten Schritt des Temperaturprogrammes bei ca. 300-500° C ausgebrannt.

Folgende Beispiele sollen das erfindungsgemäße Verfahren näher erläutern:
1. 1000 g Wolframkarbidpulver (mittlere Korngröße 15 »m) und 350 g Nickelbasislot (Ni₃P, mittlere Korngröße 10 »m) werden in einer Rührwerkskugelmühle (Rührbecher aus Polyethylen, 3 l Nutzvolumen, Rührwerk aus Edelstahl mit Hartmetallexzenterscheiben, Geschwindigkeit 700 Upm) mit Hartmetallkugeln des Durchmessers 2 mm, 2 Stunden unter Isopropanol miteinander vermahlen. Nach dem Mahlprozeß wird das Isopropanol abdestilliert und zu 1000 g dieser Pulvermischung eine Mischung von 20 g Polyisobutylen und 91 g Leichtbenzin zugegeben. Nach einstündigem maschinellen Vermischen hat sich eine siebdruckfähige Suspension gebildet, die über längere Zeit stabil ist.
2. Die Vorbehandlung der Pulvermischung aus Hartmetallpulver und Lotpulver erfolgt analog zu Beispiel 1. Nach dem Abdestillieren des Isopropanols wird zu 1000 g dieser Pulvermischung eine Mischung aus 16,5 g Polyisobutylen und 266 g Leichtbenzin sowie 4 g Thixatrol ST als rheologisches Mittel zugegeben. Nach etwa einstündigem Rühren hat sich eine Suspension gebildet mit der auch komplex geformte Teile durch Tauchen mit einer ca. 65 »m dicken auflötbaren Schicht versehen werden können.
3. 1000 g Wolframkarbidpulver (mittlere Korngröße 25 »m) und 300 g Kupferbasislotpulver (mittlere Korngröße 10 »m) werden nach den in Beispiel 1 beschriebenen Bedingungen in der dort beschriebenen Rührwerkskugelmühle behandelt.
   Nach dem Abdestillieren des Isopropanols wird zu 1000 g dieser Pulvermischung eine Mischung aus 117 g Polyacrylat und 118 g Xylol sowie 4 g Thixatrol ST zugegeben. Nach einstündigem intensiven Rühren unter leichter Erwärmung (50° C) hat sich eine siebddrucktätige Suspension gebildet, die über längere Zeit stabil ist.
4. In der in Beispiel 1 beschriebenen Rührwerksmühle werden 1000 g Chromkarbid (mittlere Korngröße 25»m) und 450 g Nickelbasislot (mittlere Korngröße 10 »m) mit Hartmetallkugeln (Durchmesser: 1 mm) bei einer Drehzahl von 700 Upm unter Isopropanol vermahlen. Nach dem Abdestillieren des Isopropanols werden zu 1000 g dieser Pulvermischung 13 g Polyisobutylen, 225 g Leichtbenzin und 6 g Thixatrol ST zugemischt. Nach etwa einstündigem Rühren hat sich eine zur Spritzverarbeitung geeignete Suspension gebildet. Damit können je nach Spritzparametern Schichtdicken im Bereich von 30-150 »m erzeugt werden.

Die so hergestellten Suspensionen erlauben auch eine automatische Prozeßführung bei den jeweils gewählten Auftragverfahren.

## Patentansprüche

1. Verfahren zur Herstellung von verschleißbeständigen Hartstoffschichten auf metallischen Unterlagen durch Aufbringen eines Gemisches aus Hartstoffen, Lotpulver und thermisch rückstandslos zersetzbaren organischen Bindemitteln auf die Unterlage, Ausbrennen des Bindemittels bei 300 bis 500° C und Auflöten der Hartstoffteilchen auf die Unterlage bei 800 bis 1100° C,
dadurch gekennzeichnet, daß
die Hartstoffteilchen und die Lotteilchen gemeinsam zu einer homogenen Mischung mit einer mittleren Korngröße von kleiner 20 »m vermahlen, mit 0,1 bis 20 Gew.% des organischen Bindemittels und 1 bis 50 Gew.% eines organischen Lösungsmittels, Rest Hartstoff-/Lotteilchengemenge, zu einer Suspension verarbeitet und diese Suspension durch Tauchen, Siebdruck, Pinseln, Spritzen oder Spachteln auf die Unterlage in Schichtdicken zwischen 10 und 500 »m aufgebracht wird.

2. Verfahren nach Anspruch 1,
dadurch gekennzeichnet,
daß als organische Bindemittel Polyacrylate, Polybutene, Polystyrole oder Zellulosederivate verwendet werden.

3. Verfahren nach Anspruch 1 oder 2,
dadurch gekennzeichnet,
daß als organisches Lösungsmittel Kohlenwasserstoffe, Glykoläther, Glykolester, Alkohole und Ketone mit Verdunstungszahlen zwischen 10 und 10000 verwendet werden.

4. Verfahren nach Anspruch 1, 2 oder 3,
dadurch gekennzeichnet,
daß die Viskosität der Suspensionen durch Zusatz rheologischer Substanzen eingestellt wird.

## Claims

1. A process for preparing wear-resistant hard material layers on metal substrates by applying a mixture of hard materials, solder powder and organic binders which decompose thermally without leaving a residue, onto the substrate, burning off the binder at 300 to 500°C and soldering the hard material particles onto the substrate at 800 to 1100°C,
characterised in that
the hard material particles and the solder particles are mutually milled to give a homogeneous mixture with an average particle size of less than 20 »m, processed with 0.1 to 20 wt.% of the organic binder and 1 to 50 wt.% of an organic solvent, the remaining amount being hard material/solder particles, to give a suspension and this suspension is applied to the substrate in a layer between 10 and 500 »m thick by immersion, a screen process, spraying, painting or spreading.

2. A process according to Claim 1,
characterised in that
polyacrylates, polybutenes, polystyrenes or cellulose derivatives are used as organic binders.

3. A process according to Claim 1 or 2,
characterised in that
hydrocarbons, glycol ethers, glycol esters, alcohols and ketones with evaporation indices between 10 and 10,000 are used as organic solvents.

4. A process according to Claim 1, 2 or 3,
characterised in that
the viscosity of the suspensions is adjusted by adding rheological substances.

## Revendications

1. Procédé d'obtention de couches de substances dures résistantes à l'usure sur des substrats métalliques, par application d'un mélange de substances dures, de poudre de soudure et d'agents liants organiques que l'on peut décomposer sans résidu par voie thermique, par cuisson de l'agent liant de 300 à 500°C et soudure des particules de substance dure sur les substrats de 800 à 1100°C, caractérisé en ce que les particules de substance dure et les particules de soudure sont broyées ensemble jusqu'à un mélange homogène, ayant une taille moyenne de grains inférieure à 20 »m, en ce qu'on convertit en une suspension avec 0,1 à 20 % en poids d'agent liant organique et 1 à 50 % en poids d'un solvant organique, le reste étant un mélange de matière dur de particules de soudure, et que cette suspension est appliquée par immersion, sérigraphie, application au pinceau, pulvérisation, ou application à la spatule sur le substrat en des épaisseurs de couche comprises entre 10 et 500 »m.

2. Procédé selon la revendication 1, caractérisé en ce que l'on utilise comme agent liant des polyacrylates, des polybutènes, des polystyrènes ou des dérivés de la cellulose.

3. Procédé selon la revendication 1 ou la revendication 2, caractérisé en ce que l'on utilise comme solvant organique des hydrocarbures, des éthers de glycol, des esters de glycol, des alcools, et des cétones avec des indices d'évaporation compris entre 10 et 10000.

4. Procédé selon la revendication 1, 2 ou 3, caractérisé en ce que l'on ajuste la viscosité par addition de substances rhéologiques.
